# EUROPEAN PATENT APPLICATION

(11) **EP 2 254 097 A1**
(43) Date of publication of application: **24.11.2010**
(21) Application number: 09006729.9
(22) Date of filing: 19.05.2009
(51) Int. Cl.: G08B 13/194, G08B 13/196, G08B 15/00, G06K 9/00, G06T 7/20, H04N 5/14

(54) **Intelligent surveillance system and method for the same**

(71) Applicant: TOPSEED TECHNOLOGY CORP., Chung Ho City, Taipei Hsien, Taiwan 235 (TW)
(72) Inventor: Chen, Shoei-Lai, Chung Ho City Taipei Hsien Taiwan 235 (TW); Chang, Cheng-Yu, Chung Ho City Taipei Hsien Taiwan 235 (TW); Hsu, Che-Hao, Chung Ho City Taipei Hsien Taiwan 235 (TW)
(74) Representative: Urner, Peter

(57) **Abstract**

An intelligent surveillance system and method for the same uses an image sensor (10) to fetch an original image and adjust the original image to obtain an adjusted image. An adjusted motion image is detected in the adjusted image. According to the location information of the adjusted motion image, an original motion image portion is fetched in the original image. Finally the original motion image portion is displayed or stored. The present invention uses a single image sensor to fetch and preserve a high-resolution panorama image. A low-resolution panorama image is obtained from the high-resolution panorama image to detect and locate moving objects. Location areas of the moving objects in the high-resolution panorama image are re-located. High-resolution images of the moving objects are obtained without digital magnifying.

## Description

### BACKGROUND OF THE INVENTION

### Field of the Invention

The present invention relates to a surveillance system and method for the same, and more particularly to an intelligent surveillance system and method for the same.

### Description of Prior Art

Due to increasing crimes recently, human has started to pay much more attention on the security mechanism. Also, the most important part of the security mechanism is a surveillance system. The most important function of the surveillance system is to solve the problem which the manpower is insufficient to quickly detect changes in environment. Hence, a good surveillance system can be used for security to reduce the property loss and consume of manpower.

A dynamic image real-time tracking technology can provide a decision when the image is changed. The dynamic image real-time tracking technology is further applied to a digital surveillance system or a traditional closed circuit television (CCTV). A recording function is started to work when the monitored image has been changed. Hence, the stored capacity for the monitored images can be saved. In addition, warning messages can be sent, as an abnormal condition occurs, to automatically provide a notification for the abnormal condition.

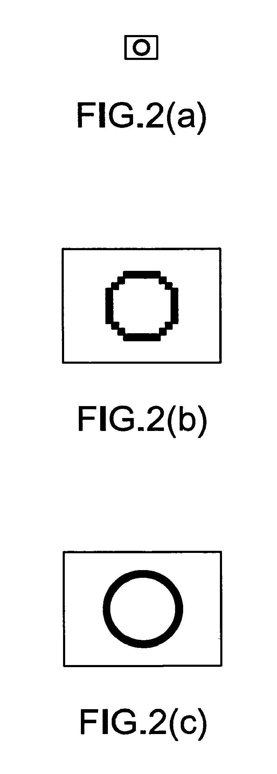

Image resolution is determined by the pixel number for an image. Reference is made to Fig. 2(a) which is a schematic view of an object. Also, references are made to Fig. 2(b) and Fig. 2(c) which are a schematic view of an object which is captured and zoomed in eight times by a low-resolution camera and a schematic view of an object which is captured by a high-resolution camera, respectively. It is obvious that different resolution for the same object will produce different image sizes. There are indistinct and distorted problems for the captured images if the low-resolution captured image is digitally zoomed to change the image size. Hence, it may not be suitable to apply in a security monitoring and control.

Traditionally, two cameras with identical resolution are used to solve the problem mentioned above. One camera, such as a panorama camera, is fixed to monitor the panorama and to build a background of the monitoring and control area. In addition, position of the moving object is obtained by subtracting the current image from the background. Afterward, another camera (such as PTZ camera) with wide angle and adjustable zoom parameter is notified by the panorama camera to trace, position, and zoom in the moving object. Hence, high-definition images for moving objects can be captures.

The PTZ camera is provided with a controllable lens, and further called "Speed Dome" camera according to its shape. The PTZ camera adopts the direct drive motor mechanism inside the camera to drive the rotating platform and the adjustable lens to. However, the process of capturing image data is limited by the operation of driving mechanisms. Also, the machine tends to be worn by long operation time. In addition, the capturing time of the PTZ may be influenced due to the auto focus function thereof. Also, the region of capturing the moving object may exceed the range of the lens to cause fault discrimination when the magnification rate is high.

### SUMMARY OF THE INVENTION

In order to improve the disadvantages mentioned above, the prevent invention provides an intelligent surveillance system.

In order to improve the disadvantages mentioned above, the prevent invention further provides a method for performing an intelligent surveillance system.

In order to achieve the objectives mentioned above, the intelligent surveillance system includes an image sensor, a data temporary memory, a digital image processor, and a program memory. The digital image processor is electrically connected to the image sensor, the data temporary memory, and the program memory, respectively. More particularly, the image sensor fetches an original image and the original image is transmitted to the digital image processor. The digital image processor adjusts the original image to obtain an adjusted image. The digital image processor detects an adjusted motion image in the adjusted image. The digital image processor captures an original motion image portion in the original image according to location information of the adjusted motion image.

In order to achieve the other objectives mentioned above, the intelligent surveillance method uses an image sensor to fetch an original image and adjust the original image to obtain an adjusted image. Afterward, an adjusted motion image is detected in the adjusted image, and an original motion image portion is captured in the original image according to location information of the adjusted motion image.

It is to be understood that both the foregoing general description and the following detailed description are exemplary, and are intended to provide further explanation of the invention as claimed. Other advantages and features of the invention will be apparent from the following description, drawings and claims.

### BRIEF DESCRIPTION OF DRAWING

The features of the invention believed to be novel are set forth with particularity in the appended claims. The invention itself, however, may be best understood by reference to the following detailed description of the invention, which describes an exemplary embodiment of the invention, taken in conjunction with the accompanying drawings, in which:
Fig. 1 is a block diagram of an intelligent surveillance system according to the present invention;
Fig. 2(a) is a schematic view of an object;
Fig. 2(b) is a schematic view of an object which is captured and zoomed in eight times by a low-resolution camera;
Fig. 2(c) is a schematic view of an object which is captured by a high-resolution camera;
Fig. 3 is a schematic view of detecting an adjusted motion image in an adjusted image;
Fig. 4 is a flowchart of inpainting and labeling the adjusted motion image;
Fig. 5 is a schematic view of a mask with 3×3 pixels;
Fig. 6 is a schematic view of a mask with 3×1 pixels;
Fig. 7(a) shows an image which is full of noises;
Fig. 7(b) shows an image of eliminating noises after performing an erosion operation;
Fig. 8 shows three images of performing a dilation operation for three times, respectively;
Fig. 9 is a schematic view of an eight-adjacent square;
Fig. 10 is a schematic view of the labeled object;
Fig. 11 shows an output exemplary image;
Fig. 12 is a flowchart of a method for performing an intelligent surveillance system;
Fig. 13 is a schematic view of the dilation operation and the erosion operation;
Fig. 14 is a schematic view of scanning an image by the dilation operation and the erosion operation;
Fig. 15 is a schematic view of performing the dilation operation; and
Fig. 16 is a schematic view of performing the erosion operation

### DETAILED DESCRIPTION OF THE INVENTION

In cooperation with attached drawings, the technical contents and detailed description of the present invention are described thereinafter according to a preferable embodiment, being not used to limit its executing scope. Any equivalent variation and modification made according to appended claims is all covered by the claims claimed by the present invention.

An intelligent surveillance system and a method for the same are used with the digital image processing technology to replace the PTZ (pan-tile-zoom) camera. The intelligent surveillance system can be used to trace moving objects, and to monitor and control specific scenes such as exits or smoking areas. More particularly, warning messages can be sent, as an abnormal condition occurs, to provide a notification. Furthermore, the image information captured is stored in a database, which can be researched in the future.

The intelligent surveillance system and a method for the same is to trace a moving object by processing a low-resolution panorama image, and afterward to obtain clear images of the moving object by processing a high-resolution panorama image. Accordingly, a traditional PTZ (pan-tile-zoom) camera can be replaced by the intelligent surveillance system. First, the high-resolution panorama image is preserved. Afterward, a resolution of the high-resolution panorama image is reduced to facilitate the detection and tracing of the moving object. Afterward, a surveillance block in the high-resolution panorama image is re-located. Finally, a processed size of the moving object can be automatically adjusted by means of image processing methods. The traditional PTZ camera is replaced by the intelligent surveillance system to reduce the machinery wear, overcome the dead angle problem, eliminate the moving delay, and simultaneously detect more than two moving objects.

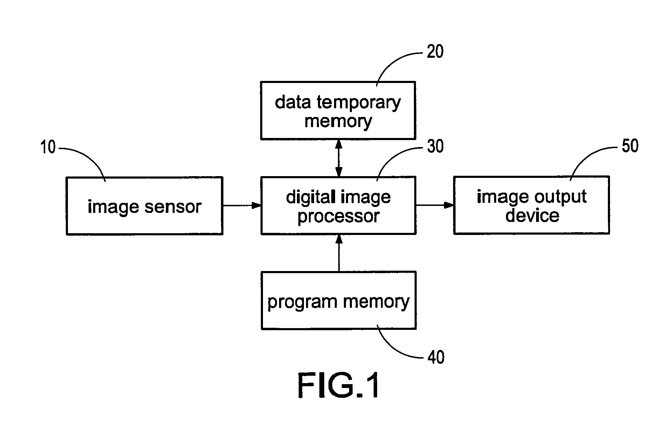

Reference is made to Fig. 1 which is a block diagram of an intelligent surveillance system according to the present invention. The intelligent surveillance system includes an image sensor 10, a temporary data memory 20, a digital image processor 30, a program memory 40, and an image output device 50. The digital image processor 30 is electrically connected to the image sensor 10, the temporary data memory 20, the program memory 40, and the image output device 50, respectively.

The image sensor 10 fetches an original image (not shown) and afterward the original image is transmitted to the digital image processor 30. The digital image processor 30 adjusts the original image to obtain an adjusted image (not shown). The digital image processor 30 reconstructs a background as required. The digital image processor 30 detects an adjusted motion image (not shown) in the adjusted image. The digital image processor 30 inpaints and labels the adjusted motion image as required to obtain a labeled image (not shown). The digital image processor 30 captures an original motion image portion (not shown) in the original image according to location information of the labeled image. When the adjusted motion image doesn't need to be inpainted and labeled by the digital image processor 30, the digital image processor 30 captures the original motion image portion in the original image according to location information of the adjusted motion image. Finally, the image output device 50 displays or stores the original motion image portion. More particularly, the image sensor 10 is a fixed high-resolution camera, and the image output device 50 is a display or a recording device. A detailed operation of the intelligent surveillance system will be explained later.

The original image is adjusted to obtain an adjusted image by the digital image processor 30 with following sub-steps: (1) to adjust processed size of the original image; (2) to transform colors of the original image; and (3) to filter speckle noises of the original image. First, a high-resolution panorama image, namely, the original image is preserved. Afterward, a resolution of the original image is reduced to lower resolution (such as 320×240 pixels) to reduce the amount of computation. For example, a resolution of an image captured by a five-megapixel camera (high-resolution camera) is 2560×1920 pixels, and the image is a 24-bit full-color image. Hence, the amount of computation for the image is huge to give rise to a redundant computation time for the intelligent surveillance system in a real-time operation. In this embodiment, the resolution of the original image is reduced from 2560×1920 pixels to 320×240 pixels, and colors of the original image are transformed from the 24-bit full-color image to the 8-bit gray-level image. Hence, the amount of computation for the image can be extremely reduced. Finally, the speckle noises of the original image can be filtered by an image low pass filter.

More particularly, the so-called background is the part of an image that lies outside the object of interest captured by the image and which form the foreground. Sometimes the captured background is not complete when a moving object is within the background or the background is influenced by sunshine. Hence, the background needs to be reconstructed when incomplete part of the background is motionless for a period of time. In addition, the background needs to be repeatedly reconstructed to correctly detect the moving object when difference between the background and continuous images are significant.

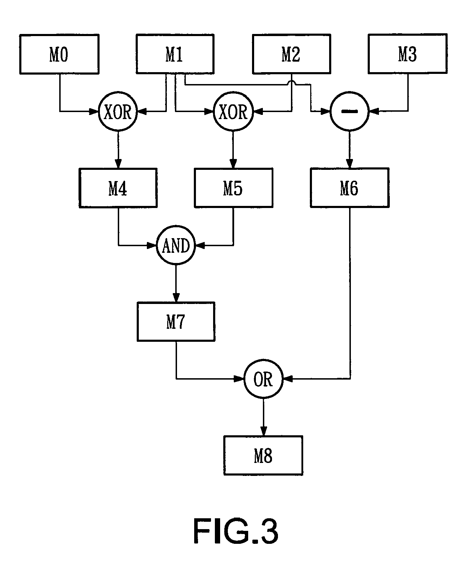

The adjusted motion image in the adjusted image is detected by the digital image processor 30, which uses a fixed background image and three continuous adjusted images. The description is detailed as following. A real moving object is calculated by using three continuous images and a fixed background. Reference is made to Fig. 3 which a schematic view of detecting an adjusted motion image in an adjusted image. The three continuous gesture images are a current grey-level image M2, a preceding grey-level image M1 before the current grey-level image M2, and a pre-preceding grey-level image M0 before the preceding grey-level image M1, respectively. In addition, a fixed background image M3 is provided. A binary image threshold value is set for converting a grey-level image into a binary image. First, a logic XOR operation is performed between the current grey-level image M2 and the preceding grey-level image M1 to obtain a first grey-level image (not shown). Afterward, a grey value of each pixel of the first grey-level image is compared to the binary image threshold value. A pixel is set as a bright pixel when the grey value of the pixel is greater than or equal to the binary image threshold value; on the contrary, a pixel is set as a dark pixel when the grey value of the pixel is less than the binary image threshold value. Hence, a first binary image M5 is composed of the bright pixels and the dark pixels.

In the same way, a logic XOR operation is performed between the preceding grey-level image M1 and the pre-preceding grey-level image M0 to obtain a second grey-level image (not shown). Afterward, a grey value of each pixel of the second grey-level image is compared to the binary image threshold value to obtain a second binary image M4. Afterward, a logic AND operation is performed between the first binary image M5 and the second binary image M4 to obtain a third binary image M7. More particularly, the third binary image M7 is an edge-moving binary image. Afterward, the preceding grey-level image M1 is subtracted by the fixed background image M3 to obtain a fourth grey-level image (not shown). Afterward, a grey value of each pixel of the fourth grey-level image is compared to the binary image threshold value to obtain a fourth binary image M6. More particularly, the fourth binary image M6 is a foreground-extracting binary image. Finally, a logic OR operation is performed between the third binary image M7 and the fourth binary image M6 to obtain a fifth binary image M8. More particularly, the fifth binary image M8 is an object-moving binary image, namely, the fifth binary image M8 is the adjusted motion image.

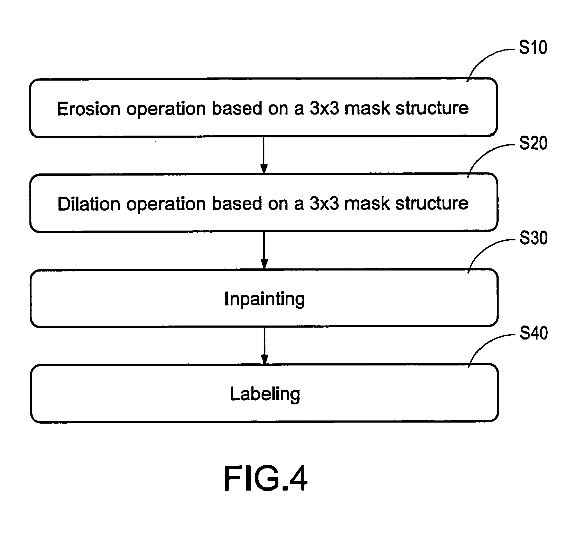

Reference is made to Fig. 4 which is a flowchart of inpainting and labeling the adjusted motion image. Because the fifth binary image M8 may include fragmental blocks in the step S10 and S20, the morphological dilation operation and the morphological erosion operation are provided to inpaint the fifth binary image M8.

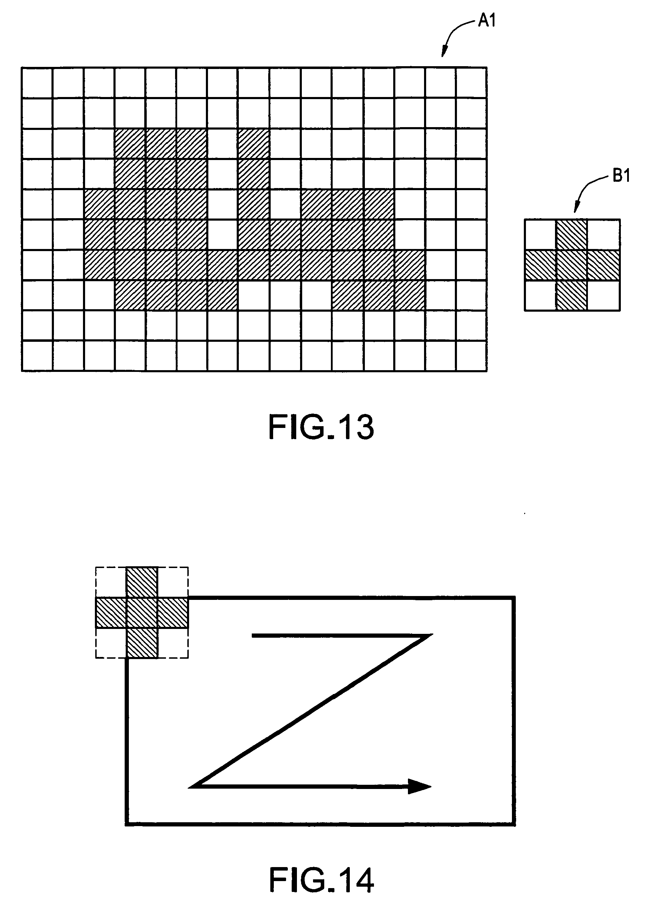

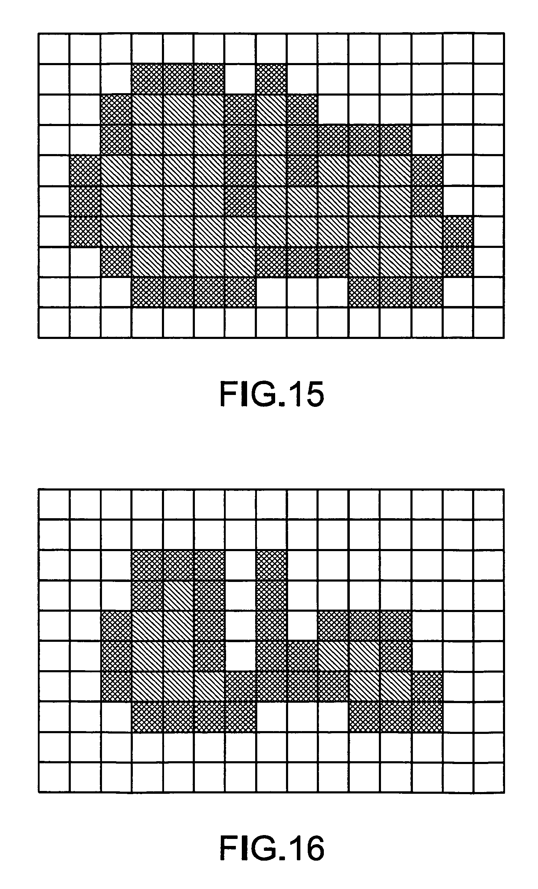

The dilation operation is a basic morphological operation. As shown in Fig. 13, it is assumed that an image A1 and a mask B1 are on a plane. The dilation operation of the image A1 and the mask B 1 (the mask B1 scans the image A1 from top edge to bottom edge and from left edge to right edge of the image A1) is defined as following. As shown in Fig. 14, a central pixel of the image A1 covered by the mask B1 is set as 1 when any pixels of the image A1 (shaded region) covered by the mask B1 (cross-shaped shaded region) is a non-zero binary value. On the contrary, the central pixel of the image A1 covered by the mask B1 is set as 0 when all pixels of the image A1 covered by the mask B1 are zero binary values. Reference is made to Fig. 15 which is a schematic view of performing the dilation operation. More particularly, the dilation region of the image A1 is labeled as X-shaped shaded region.

The erosion operation is another basic morphological operation. As shown in Fig. 13, it is assumed that an image A1 and a mask B1 are on a plane. The erosion operation of the image A1 and the mask B1 (the mask B1 scans the image A1 from top edge to bottom edge and from left edge to right edge of the image A1) is defined as following. As shown in Fig. 14, a central pixel of the image A1 covered by the mask B1 is set as 0 when any pixels of the image A1 (non-shaded region) covered by the mask B1 (cross-shaped shaded region) is a zero binary value. On the contrary, the central pixel of the image A1 covered by the mask B1 is set as 1 when all pixels of the image A1 covered by the mask B1 are non-zero binary values. Reference is made to Fig. 16 which is a schematic view of performing the erosion operation. More particularly, the erosion region of the image A1 is labeled as X-shaped shaded region.

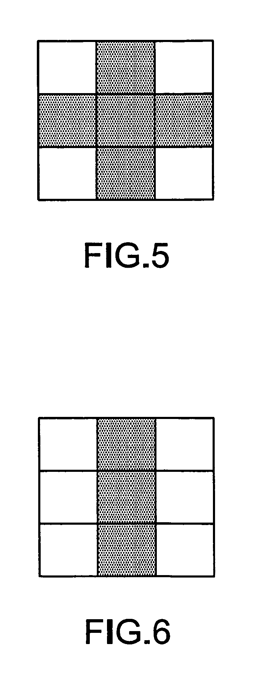

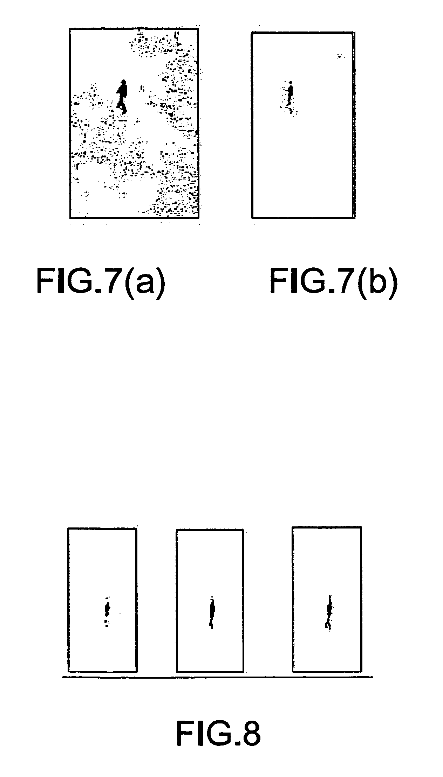

Generally speaking, the morphological dilation operation and the morphological erosion operation are implemented based on the 3×3 mask structure or the 5×5 mask structure, and more particularly for the intelligent surveillance system of monitoring human behavior. In this embodiment, however, the 3×3 mask structure (shown in Fig. 5) is provided for the erosion operation, and the 3×1 mask structure (shown in Fig. 6) is provided for the dilation operation. First, an erosion operation is performed for one time to eliminate residual noises pixels in a complicated background image. For example, an image full of noises is shown in Fig. 7(a); and the image of eliminating residual pixels after performing the erosion operation for one time is shown in Fig. 7 (b). Afterward, a complete image of the moving object is obtained after performing the dilation operation for three times to combine image blocks of the human body, e.g. the head, body, and feet, as shown in Fig. 8.

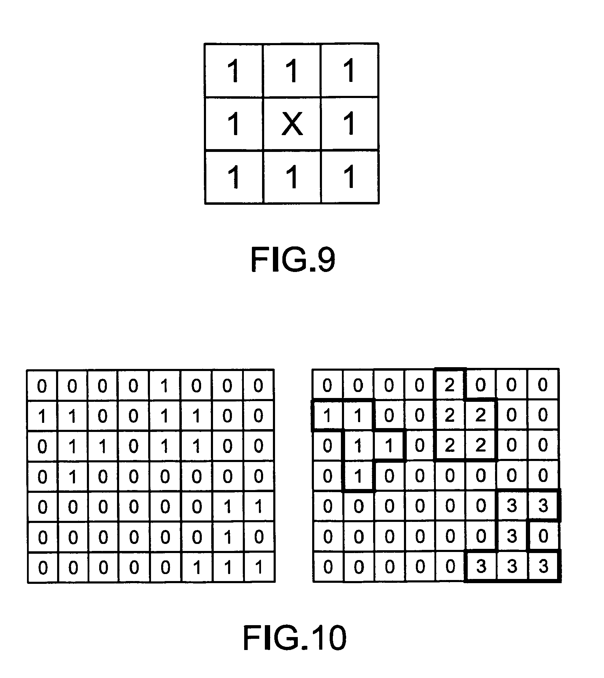

Because it is possible to detect more than two moving objects in the step S30 and S40, the amount of the moving objects is need to be calculated using a labeling method. The major purpose of the connected-component labeling method is to label adjacent pixels as the same number. Hence, the amount of the group having the same number can be calculated according to the labeled numbers, namely, the amount of the group is equal to the amount of the moving objects. Reference is made to Fig. 9 which is a schematic view of an eight-adjacent square. The eight-adjacent rule is to scan a binary image from left to right and from top to bottom so as to label adjacent pixels with non-zero binary values as the identical and unique number. Hence, the amount of the moving objects can be calculated according to the labeled numbers. As shown in Fig. 10 (right), it is clear that three moving objects are detected and labeled 1, 2, and 3, respectively.

Afterward, the digital image processor 30 fetches the original motion image portion in the original image according to location information of the labeled image. A start position and an ending position of the moving object can be acquired to calculate size and relative position of the moving object based on the above-mentioned labeling method. Afterward, the location information of the labeled image is transmitted to the original image (namely, the high-resolution panoramic image) to display the original motion image with real image size in the image output device 50 to achieve image zooming effect.

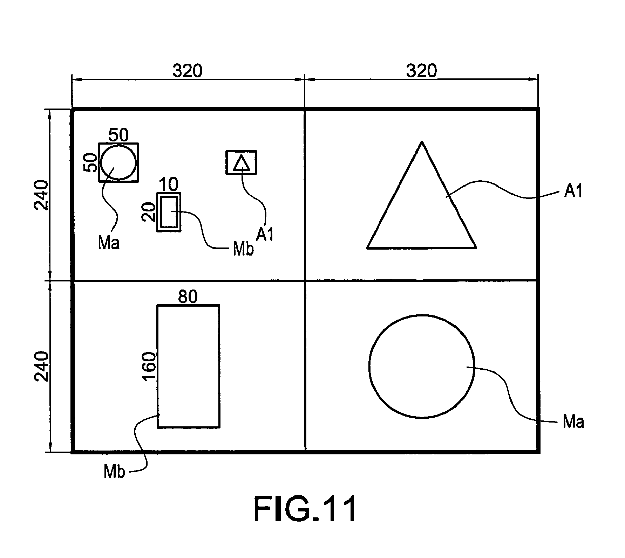

Reference is made to Fig. 11 which shows an exemplary output image. The top-left corner of the Fig. 11 shows a panoramic image with 320×240 pixels, and the panoramic image with 320×240 pixels is the adjusted image. Namely, the resolution of the original image is reduced from 2560×1920 pixels to 320×240 pixels to obtain the adjusted image. The panoramic image includes a first moving object Ma, a second moving object Mb, and a user setting surveillance block A1. More particularly, a detailed description of the user setting surveillance block A1 will be explained later. The first moving object Ma, the second moving object Mb, and the user setting surveillance block A1 at the top-left corner of the original image with 2560×1920 pixels are fetched to display at the bottom-right corner, bottom-left corner, and top-right corner of the Fig. 11, respectively. Namely, the first moving object Ma, the second moving object Mb, and the user setting surveillance block A1 are displayed at the adjusted image with 320×240 pixels. For example, size of the second moving object Mb at the top-left corner of the Fig. 11 is 10×20 pixels. However, the second moving object Mb is 80×160 pixels displayed at the bottom-left corner of the Fig. 11 when the second moving object Mb is captured by a five-megapixel camera (with 2560×1920 pixels). Hence, both length and width of the second moving object Mb will be zoomed in eight times. Accordingly, it is equivalent that a PTZ camera with both length and width being zoomed in eight times is provided for a real-time trace operation. In addition, a processed size of the moving object will be automatically adjusted by means of image processing methods when size of the moving object exceeds 320×240 pixels or doesn't. For example, size of the first moving object Ma at the top-left corner of the Fig. 11 is 50×50 pixels. Because both length and width of the first moving object Ma are zoomed in eight times, size of the first moving object Ma will be adjusted to 400×400 pixels. Further more, a processed size of the first moving object Ma will be automatically adjusted to 640×480 pixels because the first moving object Ma can not be completely displayed in 320×240 pixels. Finally, the processed size of the first moving object Ma will be stored in 640×480 pixels.

The intelligent surveillance system of the present invention can be provided to trace moving objects, and to monitor and control specific scenes such as exits or smoking areas. First, a surveillance block is set in the adjusted image by the user. Afterward, the digital image processor 30 fetches an original surveillance block image in the original image according to location information of the surveillance block. Finally, the image output device 50 displays or stores the original surveillance block image.

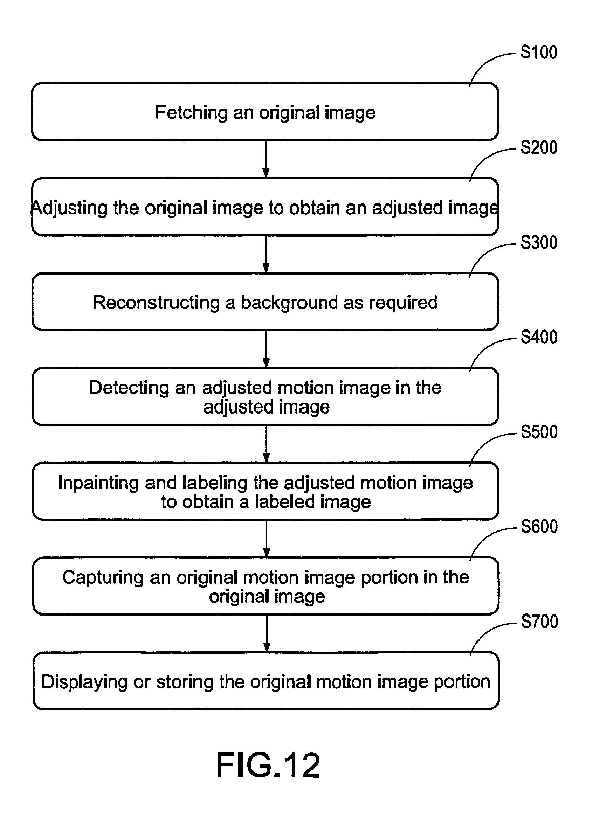

Reference is made to Fig. 12 which is a flowchart of a method for performing an intelligent surveillance system. First, an image sensor fetches an original image (S100). Afterward, the original image is adjusted to obtain an adjusted image (S200). Afterward, a digital image processor reconstructs a background as required (S300). Afterward, an adjusted motion image is detected in the adjusted image (S400). Afterward, the digital image processor inpaints and labels the adjusted motion image as required to obtain a labeled image (S500). Afterward, the digital image processor captures an original motion image portion in the original image according to location information of the labeled image (S600). However, when the adjusted motion image doesn't need to be inpainted and labeled in the step S500, the step S600 captures an original motion image portion in the original image according to location information of the adjusted motion image. Finally, an image output device displays or stores the original motion image portion (S700). More particularly, the image sensor is a fixed-resolution camera, and the image output device is a display or a recording device.

The step S200 of adjusting the original image to obtain an adjusted image includes following sub-steps: (1) to adjust processed size of the original image; (2) to transform colors of the original image; and (3) to filter speckle noises of the original image. First, a high-resolution panorama image, namely, the original image is preserved. Afterward, a resolution of the original image is reduced to lower resolution (for example, 320×240 pixels) to reduce the amount of computation. For example, a resolution of an image captured by a five-megapixel camera (high-resolution camera) is 2560×1920 pixels, and the image is a 24-bit full-color image. Finally, the speckle noises of the original image can be filtered by an image low pass filter.

More particularly, the step S400 detects an adjusted motion image in the adjusted image by means of a fixed background image and three continuous adjusted images. Because the process of the step S400 has been mentioned for the intelligent surveillance system, the detail is omitted here for conciseness. The step S500 inpaints and labels the adjusted motion image to obtain a labeled image. In this embodiment, a 3×3 mask structure is provided for the erosion operation, and a 3×1 mask structure is provided for the dilation operation. Because it is possible to detect more than two moving objects, the amount of the moving objects needs to be calculated using a labeling method.

The intelligent surveillance system of the present invention can be provided to trace moving objects, and to monitor and control specific scenes such as exits or smoking areas. First, a surveillance block is set in the adjusted image by the user. Afterward, the digital image processor fetches an original surveillance block image in the original image according to location information of the surveillance block. Finally, the image output device displays or stores the original surveillance block image.

In conclusion, the intelligent surveillance system has the following features:
1. A resolution of an image captured by a five-megapixel camera (high-resolution camera) is 2560×1920 pixels. Hence, the amount of stored data and the amount of computation for the image are huge. However, the intelligent surveillance system provides a recording frame with 640×480 pixels to reduce the amount of stored data (to only one-sixteenth the amount of stored data) to clearly display captured images of tracing moving objects and monitoring and controlling specific scenes.
2. The PTZ (pan-tile-zoom) camera can be replaced by the intelligent surveillance system to dispense with the machinery wear, overcome the dead angle problem, eliminate the moving delay, and simultaneously detect more than two moving objects.
3. One fixed high-resolution camera can replace one low-resolution camera and one low-resolution PTZ camera to reduce manpower costs, raise life quality and home-living safety. Hence, the intelligent surveillance system can be effectively applied to various kinds of environments.
4. The intelligent surveillance system is highly expandable, easy integrated, product-general, low-cost and high-quality, and easy to use.

## Claims

1. An intelligent surveillance system, comprising:
an image sensor (10);
a digital image processor (30) electrically connected to the image sensor (10);
a data temporary memory (20) electrically connected to the digital image processor (30); and
a program memory (40) electrically connected to the digital image processor (30);
wherein the image sensor (10) fetches an original image and the original image is transmitted to the digital image processor (30);
the digital image processor (30) adjusts the original image to obtain an adjusted image;
the digital image processor (30) detects an adjusted motion image in the adjusted image; and
the digital image processor (30) captures an original motion image portion in the original image according to location information of the adjusted motion image.

2. The intelligent surveillance system in claim 1, further comprising:
an image output device (50) electrically connected to the digital image processor (30) to display or store the original motion image portion.

3. A method for performing an intelligent surveillance system, the method comprising the steps of:
(a) fetching an original image by using an image sensor (10);
(b) adjusting the original image to obtain an adjusted image;
(c) detecting an adjusted motion image in the adjusted image; and
(d) capturing an original motion image portion in the original image according to location information of the adjusted motion image.

4. The method in claim 3, after the step (d) further comprising the step of:
(e1) displaying the original motion image portion.

5. The method in claim 3, after the step (d) further comprising the step of:
(e2) storing the original motion image portion.

6. The method in claim 3, wherein the step (b) further comprising:
(b1) adjusting processed size of the original image to a predetermined size;
(b2) transforming colors of the original image; and
(b3) filtering speckle noises of the original image.

7. The method in claim 6, wherein the predetermined size is 320×240 pixels in the step (b1).

8. The method in claim 6, wherein the step (b2) transforms colors of the original image from the 24-bit full-color image to the 8-bit gray-level image.

9. The method in claim 3, wherein the step (c) detects the adjusted motion image in the adjusted image by means of a fixed background image and three continuous adjusted images.

10. The method in claim 3, after the step (c) further comprising the steps of:
(c1) inpainting and labeling the adjusted motion image to obtain a labeled image;
(c2) capturing an original motion image portion in the original image according to location information of the labeled image; and
(c3) displaying the original motion image portion.

11. The method in claim 10, further comprising:
(c4) storing the original motion image portion.

12. The method in claim 10, wherein the step (c1) inpaints the adjusted motion image by using erosion operation and dilation operations.

13. The method in claim 12, wherein the erosion operation is performed for one time using a 3×3 mask structure, and the dilation operation is performed for three times using a 3×1 mask structure.

14. The method in claim 3, after the step (b) further comprising the steps of:
(b1) setting a surveillance block in the adjusted image;
(b2) capturing an original surveillance block image in the original image according to location information of the surveillance block; and
(b3) displaying the original surveillance block image.

15. The method in claim 14, further comprising:
(b4) storing the original surveillance block image.
